Europäisches Patentamt

European Patent Office

Office européen des brevets

(11) Publication number: **0 333 285**
**A1**

# EUROPEAN PATENT APPLICATION

(21) Application number: 89200636.2

(22) Date of filing: 13.03.89

(51) Int. Cl.4: **G11B 5/852 , G11B 5/842 , H01F 1/08**

(30) Priority: 14.03.88 NL 8800615

(43) Date of publication of application:
20.09.89 Bulletin 89/38

(84) Designated Contracting States:
AT BE CH DE ES FR GB GR IT LI LU NL SE

(71) Applicant: **Bootsma, Gerben Wiebe**
**2a, Blerckweg**
**NL-8084 EZ 't Harde(NL)**

(72) Inventor: **Bootsma, Gerben Wiebe**
**2a, Blerckweg**
**NL-8084 EZ 't Harde(NL)**

(74) Representative: **Morel, Christiaan F., Dr.Ir.**
**MORELPATENT Laarstraat 3**
**NL-8166 GR Emst (Epe)(NL)**

(54) **A method for applying a layer to be magnetised, and an object or surface provided with such a layer.**

(57) A method for applying a magnetisable layer, in which a very fine powder of a magnetisable material is prepared, said powder being mixed with a binder, which mixture is applied on a surface and is, finally, dried or cured. The invention also relates to a surface layer made by means of this method, and to an object or surface provided with such a layer.

Fig: 1

EP 0 333 285 A1

## A method for applying a layer to be magnetised, and an object or surface provided with such a layer.

The invention relates to a method for providing an object with a layer to be magnetised, and a surface or object provided with a thin layer or coating.

Many substances and materials are known which can be magnetised. Known materials are, for instance, iron and a number of compounds thereof, as well as compounds of, for instance, chromium. Objects can be made of these known materials which, subsequently, can be made magnetic, for instance by means of a permanent magnet. Magnetic objects will easily adhere to metallic surfaces by these magnetic forces, and subsequently such objects can be easily removed again from said surfaces without damaging said surfaces. It is also known to make small objects of a magnetisable material, in order to fix such objects temporarily on other objects such as papers. Such small magnets have, for instance, the shape of a disc.

Until now it is only known to manufacture objects completely of a magnetisable material and to magnetise them thereafter. It is also known to provide objects with a thin plate of a magnetisable material, for instance by gluing said thin plate on the object, said plate being magnetic. It is not yet known to provide surfaces and objects with a thin magnetic layer.

It is an object of the invention to provide a surface or an object with a thin layer of a magnetisable material, and a method for applying a thin layer of a substance with magnetic characteristics on a surface or an object, and to magnetise, subsequently, said layer.

The object of the invention can be realised by a method according to the invention in that a fine powder of a magnetisable substance or chemical compound is prepared, which powder is subsequently mixed with a binder, after which this mixture is applied in a thin layer on a surface and is, thereafter, dried or cured, after which said surface is being magnetised. According to this method it is possible to provide surfaces of certain objects with a surface coating or layer, and to magnetise this applied surface thereafter. As a surprising effect it has appeared that, in this layer, magnetic north and south poles can be formed at a short mutual distance, the direction of the north-south poles being parallel to the surface. Moreover it has appeared that the magnetism cannot be easily removed with conventional means.

The thin surface layer on a surface or object, consisting, according to the invention, of a magnetisable material and a binder, can contain, as a binder, for instance a thermal plastic material, paper, a plastics material, an acrylic polymer or similar materials.

Preferably an object or a surface is provided with a thin layer of a material, said thin surface layer consisting of a magnetisable material and a binder, said binder having a large dielectric constant. Very good results have been obtained by using, as the magnetisable material, $Ba\ Fe_{12}O_{19}$, and as the binder an insulating material with a large dielectric constant. Such surfaces can be magnetised, and then magnetic north and south poles will be present in the surface, and the mutual distance of a north and a south pole can be less than 1 mm.

Preferably said thin layers will be magnetised in such a manner that the surface will be magnetised in the direction of the surface according to a pattern of parallel lines, alternating lines consisting of only magnetic north poles, and the intermediate lines consisting of only magnetic south poles, the mutual distance between said lines being smaller than 5 mm. By this manner of magnetising it is obtained that two objects being magnetised in the same manner can only be interconnected in a restricted number of ways.

According to the invention there are still other possibilities, such as magnetising only specific portions of the surface according to a line pattern, and magnetising several portions of the surface according to a specific line pattern, and the direction of the lines of a magnetised portion of the surface can include a given angle with the direction of the lines of an other magnetised portion of said surface.

Preferably the method according to the invention comprises firstly preparing a fine powder of the magnetisable substance, and subsequently sieving said fine powder so that the particle size thereof is smaller than a desired magnitude, for instance for obtaining that the particle size of the magnetisable powder will be smaller than 2 um. By means of this method according to the invention it will be possible to provide a layer thickness which substantially corresponds to the particle size of the powder. As the powder is finer, the layer to be provided can be made thinner accordingly.

By reference to the drawing some embodiments will be elucidated; in the drawing shows:

Fig. 1 a top view of a surface provided with a thin layer or coating; and

Fig. 2 a top view of a magnetised pattern.

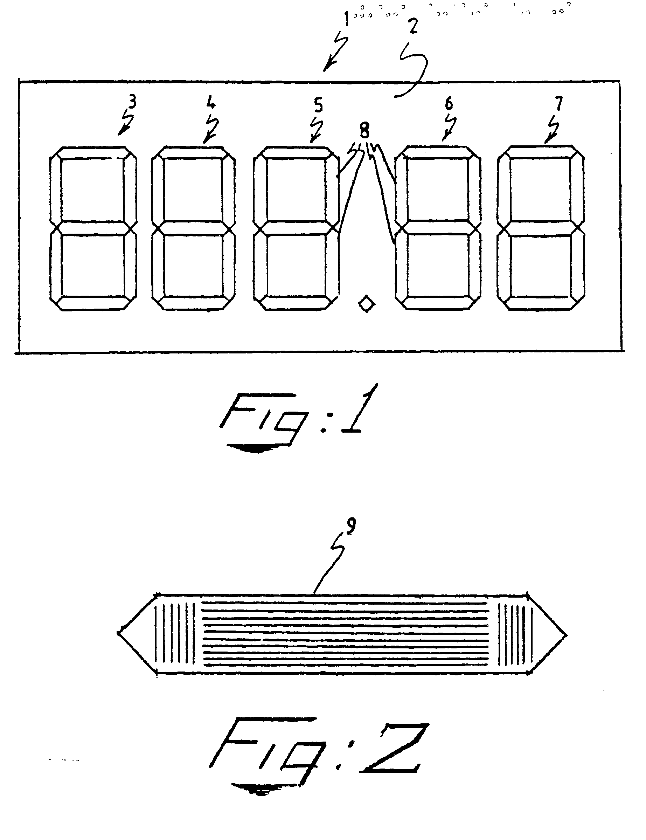

Fig. 1 shows an embodiment in which, on the surface of a plate 1, a thin layer 2 of a magnetisable material is provided. Subsequently said surface is being magnetised in several places 3, 4, 5, 6 and 7 according to a given pattern, in this case a number of eights, each eight being composed from seven similar parts 8. Each similar part 8 has been magnetised according to the pattern shown in Fig. 2.

From a second plate of, for instance, coloured plastics, a plurality of strips 9 have been cut in the shape as shown in Fig. 2. By magnetising said strips in the same manner as its identical parts 8 of the eights, said magnetised strips 9 can be positioned on the eights of the surface of the plate 1. Since said strips have been magnetised in the same manner, they can be positioned in only one manner on the eights. By not covering all the parts of the eight with said coloured and magnetic strips, all numbers can be formed. It is then possible to form in a simple manner a large number and to make modifications in a simple manner, and only one kind of strip 9 is required. This magnetised plate made of plastics as shown in Fig. 1 can be used for producing, for instance, price tags to be used in shops or department stores, by forming numbers by means of the magnetised strips. Said price tags can be easily changed by taking away or adding such strips.

## Claims

1. A method for providing an object with a magnetisable layer, **characterised in that** a very fine powder is prepared from a magnetisable material, which powder is subsequently mixed with a binder, whereafter said mixture is applied in a thin layer on a surface and is, then, dried or cured.

2. The method of claim 1, **characterised in that**, after the surface has been dried or cured, a portion of the surface or the complete surface is being magnetised.

3. The method of claim 1 or 2, **characterised in that** the applied layer is magnetised in such a manner that, in the outer surface, a plurality of north and south poles is formed.

4. A surface or an object, provided with a thin layer or coating, **characterised in that** the thin surface layer consists of a magnetisable material and a binder, said binder having a large dielectric constant.

5. A surface layer according to claim 4, **characterised in that** the magnetisable material is Ba Fe$_{12}$ O$_{19}$.

6. A surface layer according to claim 4 or 5, **characterised in that** the thin surface layer is or can be magnetised in the direction of the surface according to a pattern of parallel lines, alternating lines consisting of only magnetic north poles and the intermediate lines consisting of only magnetic south poles, the mutual distance between said lines being smaller than 5 mm

7. The surface layer according to any one of claims 4, 5 or 6, **characterised in that** only specific portions of the surface have been magnetised according to a line pattern.

8. The surface layer of claim 7, **characterised in that** several portions of the surface have been magnetised according to a specific line pattern, and in that the direction of the lines of a magnetised portion of said surface include a given angle with the direction of the lines of a different magnetised portion of said surface.

9. The surface layer according to any one of claims 4..8, **characterised in that** the distance between said lines is 1,5..0,5 mm.

10. The surface layer according to any one of claims 4..9, **characterised in that** the particle size of the magnetisable material is smaller than 2 um.

11. The surface layer according to any one of claims 4..10, **characterised in that** the binder is a thermo plastics material.

12. The surface layer according to any one of claims 4..10, **characterised in that** the binder is an acrylic polymer.

13. The surface layer according to any one of claims 4..10, **characterised in that** the binder is paper.

14. The surface layer according to any one of claims, 4..10, **characterised in that** the binder is a plastics material.

15. The method according to any one of claims 1..3, **characterised in that** the material to be magnetised after being powdered is sieved so that the particle size will be smaller than 2 um.

16. An object or a surface, **characterised in that** it is provided with a surface layer according to any one of the preceeding claims.

Fig:1

Fig:2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | NL-A-8 202 336 (H. SLOOTJES)<br>* Claims 1,5,7,8,9 * | 1,16 | G 11 B 5/852<br>G 11 B 5/842<br>H 01 F 1/08 |
| X | CH-A- 608 029 (E. MEYER)<br>* Claims 1,4; page 2, left-hand column, line 59 - right-hand column, line 10 * | 1,4,11-14,16 | |
| X | DE-A-2 010 831 (MAGNETFABRIK BONN GmbH)<br>* Claims 1-11; page 4, line 5 - page 6, line 17 * | 1-4,6-8,16 | |
| X | DE-A-1 669 643 (M. BAERMANN)<br>* Claims 1,6,7; page 8, line 22 * | 1-9,11,14,16 | |
| X | DE-A-2 430 794 (MINNESOTA MINING AND MANUFACTURING CO.)<br>* Claims 1,5,7; page 5, lines 13-24 * | 1,5,10,15,16 | |
| X | DE-A-2 748 215 (FUJI PHOTO FILM CO., LTD)<br>* Claims 1,2 * | 1,6,8,9 | |

TECHNICAL FIELDS SEARCHED (Int. Cl.4)

G 11 B
H 01 F

The present search report has been drawn up for all claims

| Place of search | Date of completion of the search | Examiner |
|---|---|---|
| THE HAGUE | 01-06-1989 | VITZTHUM N.A. |